# EUROPÄISCHE PATENTSCHRIFT

(11) **EP 2 193 482 B1**
(45) Veröffentlichungstag und Bekanntmachung des Hinweises auf die Patenterteilung: **28.11.2012**
(21) Anmeldenummer: 08802550.7
(22) Anmeldetag: 24.09.2008
(51) Int. Cl.: G06K 19/077

(54) **RFID-TRANSPONDER**
RFID TRANSPONDER
TRANSPONDEUR RFID

(30) Priorität: 27.09.2007 DE 102007046679
(43) Veröffentlichungstag der Anmeldung: 09.06.2010
(73) Patentinhaber: PolyIC GmbH & Co. KG, 90763 Fürth (DE)
(72) Erfinder: ULLMANN, Andreas, 90513 Zirndorf (DE); BÖHM, Markus, 91096 Möhrendorf (DE)
(74) Vertreter: Zinsinger, Norbert
(86) Internationale Anmeldenummer: PCT/EP2008/008069
(87) Internationale Veröffentlichungsnummer: WO 2009/043511

(56) Entgegenhaltungen:
- WO-A-01/61644
- WO-A-2006/009934
- US-A1- 2006 027 666

## Beschreibung

Die Erfindung betrifft einen RFID-Transponder (RFID = Radio Frequency Identificaton).

RFID-Transponder werden in zunehmenden Maße zur Kennzeichnung und zum Schutz von Waren und Dokumenten eingesetzt. Hierbei ist es üblich, die Antennenbaugruppe, welche die Antenne zum Empfang des RFI-Signals umfasst, und die Elektronikbaugruppe, welche die Auswerteelektronik umfasst und übilcherweise von einem Silizium-Chip gebildet wird, separat zu fertigen und dann galvanisch, beispielsweise mit den hierzu zur Verfügung stehenden großtechnischen Anlagen, beispielsweise durch Löten, zu verbinden.

Die WO 2006/009934 A1, die den Oberbegriff des Anspruchs 1 bildet, einen RFID-Transponder, welcher einen RFID-Chip und eine Antenne aufweist. Die Antenne ist hierbei auf einem Substrat aufgebracht. Der RFID-Chip besitzt Kontakte, welche galvanisch mit Leiterbahnen verbunden sind. Diese Leiterbahnen sind weiter kapazitiv mit der Antenne gekoppelt.

Die WO 01/61644 A1 beschreibt einen Transponder, welcher über einen integrierten Schaltkreis und eine Antenne verfügt.

Die US 2006/027666 A1 beschreibt einen RFID-Transponder, bei dem ein Chip mit dem einen Ende einer Antenne verbunden ist und das andere Ende der Antenne mit einem kapazitiven Element verbunden ist.

Der Erfindung liegt nun die Aufgabe zugrunde, einen verbesserten RFID-Transponder bereitzustellen.

Diese Aufgabe wird durch einen RFID-Transponder gelöst, der eine Antennenbaugruppe aufweist, welche eine oder mehrere elektrisch leitende Funktionsschichten aufweist, von denen eine zumindest bereichsweise in Form einer Antennenspule ausgeformt ist und der RFID-Transponder weiter eine Elektronikbaugruppe in Form eines mehrschichtigen Folienkörpers aufweist, welcher eine oder mehrere elektrisch leitende Funktionsschichten und eine oder mehrere elektrisch halbleitende Funktionsschichten aufweist, welche eine integrierte elektronische Schaltung bilden, und wobei in einem ersten Bereich des RFID-Transponders jeweils eine der einen oder mehreren elektrisch leitenden Funktionsschichten der Elektronikbaugruppe, welche eine Elektrodenschicht der Elektronikbaugruppe ist und in welcher ein oder mehrere Elektroden für ein oder mehrere organische Feldeffekttransistoren oder organische Dioden ausgeformt sind, weiter in Form einer ersten Kondensatorplatte ausgeformt ist, die so einen integralen Bestandteil der integrierten elektronischen Schaltung bildet, und in einem zweiten Bereich des RFID-Transponders jeweils eine der einen oder mehreren elektrisch leitenden Funktionsschichten der Elektronikbaugruppe, welche eine Elektrodenschicht der Elektronikbaugruppe ist und in welcher weiter ein oder mehrere Elektroden für ein oder mehrere organische Feldeffekttransistoren oder organische Dioden ausgeformt sind, weiter in Form einer zweiten Kondensatorenplatte ausgeformt ist, die so einen integrierten Bestandteil der integrierten elektronischen Schaltung bildet, und in dem ersten Bereich des RFID-Transponders jeweils eine der einen oder mehreren elektrisch leitenden Funktionsschichten der Antennenbaugruppe in Form einer dritten Kondensatorplatte ausgeformt ist und in dem zweiten Bereich des RFID-Transponders jeweils eine der einen oder mehreren elektrisch leitenden Funktionsschichten der Antennenbaugruppe in Form einer vierten Kondensatorplatte ausgeformt ist, wobei die Elektronikbaugruppe und die Antennenbaugruppe elektrisch über Kondensatoren gekoppelt sind, die von der ersten und dritten sowie von der zweiten und vierten Kondensatorplatte gebildet sind.

Überraschenderweise hat sich gezeigt, dass durch eine derartige Ausgestaltung eines RFID-Transponders zum einen die Güte des Transponders verbessert werden kann, und zum anderen sowohl ein besserer Schutz vor mechanischen Umwelteinflüssen als auch eine kostengünstigere Herstellung ermöglicht wird. Es können für die Herstellung der Elektronikbaugruppe Technologien wie Drucken, Rakeln oder Sputtern eingesetzt werden, die zwar umfangreiche Spezialausrüstungen benötigen, jedoch Kostenvorteile für die Massenfertigung bieten. Versuche habe gezeigt, dass die für die Kontaktierung der mittels einer derartigen Herstellungstechnologie hergestellten Elektronikbaugruppen eingesetzten Leitkleber nur zu einer sehr fragilen, mechanisch anfälligen galvanischen Verbindung führen, was wohl darauf zurückzuführen ist, dass diese Leitkleber im ausgehärteten Zustand nicht mehr flexibel sind. Durch die Erfindung ist es möglich, auf die Verwendung dieser Leitkleber bei der elektrischen Kopplung der Antennenbaugruppe mit der Elektronikbaugruppe zu verzichten, was zum einen einen Kostenvorteil mit sich bringt und zum anderen die Ausfallsicherheit des Transponders verbessert (kein Temperaturschritt mehr notwendig, keine "fragile" elektrische Kopplung). Weiterhin ist die Antennenspule an der Elektronikbaugruppe einerseits induktiv mit dem Lesegerät und andererseits (ausschließlich) kapazitiv mit der Elektronikbaugruppe gekoppelt. Hierdurch steigt zum einen die Eingangs-Impedanz des RFID-Transponders. Weiter fällt der Bondingwiderstand weg, so dass sich insgesamt eine deutliche Erhöhung der Güte des RFID-Transponders ergibt. Hierdurch erhöht sich die Reichweite, innerhalb der der RFID-Transponder mit dem Lesegerät interagieren kann, die durch die Gleichrichtung des eingekoppelten RF-Signals generierbare Versorgungsspannung wird erhöht und die Modulation wird deutlich verbessert (ca. um 20 %).

Die Antennenbaugruppe und die Elektronikbaugruppe sind vorzugsweise vollständig galvanisch getrennt und ausschließlich über die Kondensatorplatten, d.h. die erste und dritte sowie die zweite und vierte Kondensatorplatte elektrisch gekoppelt. Die Antennenbaugruppe und Elektronikbaugruppe sind vorzugsweise ausschließlich kapazitiv elektrisch gekoppelt. Hierbei ist vorzugsweise das eine Ende der Antennenspule mit der dritten Kondensatorplatte und das andere Ende der Antennenspule mit der vierten Kondensatorplatte verbunden.

Weiter ist vorzugsweise eine Kleberschicht vorgesehen, welche die Elektronikbaugruppe mit der Antennenbaugruppe verbindet. Diese Kleberschicht besteht vorzugsweise aus einem dielektrischen, d.h. elektrisch nicht leitfähigen Material. Die Kleberschicht hat hierbei vorzugsweise eine Dicke von weniger als 15 µm, weiter bevorzugt zwischen 5 und 15 µm. Es ist hierbei auch möglich, dass die Kleberschicht nicht vollflächig zwischen dem mehrschichtigen Folienkörper vorgesehen sind, welcher einerseits die Elektronikbaugruppe und andererseits die Antennenbaugruppe ausbildet, sondern nur bereichsweise vorgesehen ist oder von einer Vielzahl von Kleberpunkten gebildet ist. Vorzugsweise ist die Kleberschicht hierbei in dem ersten und zweiten Bereich des RFID-Transponders in Form einer Vielzahl von Klebepunkten vorgesehen, um so die Kapazität der von den Kondensatorenplatten gebildeten Kondensatoren zu erhöhen.

Gemäß eines bevorzugten Ausführungsbeispiels der Erfinder sind die einander zugeordneten Kondensatorplatten, d.h. die erste und die dritte Kondensatorplatte sowie die zweite und die vierte Kondensatorplatte, weniger als 15µm, bevorzugt weniger als 10 µm, voneinander entfernt. Hierdurch ist es möglich, ein vorteilhaftes Verhältnis zwischen dem durch die Kondensatorplatte verursachten Flächenverbrauch und der mechanischen Beständigkeit des RFID-Transponders zu erzielen.

Die Überdeckungsfläche der einander zugeordneten Kondensatorplatten wird vorzugsweise so gewählt, dass sich jeweils eine Kapazität von 100 Pico-Farad bis 200 Pico-Farad ergibt.

Gemäß eines bevorzugten Ausführungsbeispiels der Erfindung besitzen die erste Kondensatorplatte und die dritte Kondensatorplatte eine Überdeckungsfläche von mehr als 25 mm² und die zweite Kondensatorplatte und die vierte Kondensatorplatte eine Überdeckungsfläche von mehr als 25 mm².

Die Elektronikbaugruppe weist eine organische elektronische Schaltung auf, die sich in den verwendeten Materialien und Herstellungsprozessen grundlegend von einem üblicherweise für RFID-Transponder verwendeten Silizium-Chip unterscheidet. Die
elektrischen Funktionsschichten dieser Schaltung werden von Schichten eines mehrschichtigen Folienkörpers gebildet, welche durch Drucken, Rakeln, Aufdampfen oder Aufsputtern aufgebracht sind. Die elektrischen Funktionsschichten der organischen elektrischen Schaltung werden hierbei im Gegensatz zu einem Silizium-Chip auf einem flexiblen Trägersubstrat bestehend aus einer Kunststofffolie einer Dicke von 10µm bis 100µm aufgebaut. Diese Kunststofffolie bildet so das Trägersubstrat der integrierten elektronischen Schaltung, anstelle eines Siliziumdioxidplättchens bei einer, von einem Silizium-Chip gebildeten integrierten elektronischen Schaltung. Die halbleitenden Funktionsschichten dieser Schaltung werden vorzugsweise in einer Lösung aufgebracht und somit beispielsweise durch Drucken, Sprühen, Rakeln oder Gießen aufgebracht. Als Materialen der halbleitenden Funktionsschichten kommen hierbei vorzugsweise halbleitende Funktionspolymere wie Polythiopen, Polyterthropen, Polyfluoren, Pentaceen, Tetraceen, Oligothropen, angoranischem Silizium eingebettet in einer Polymermatrix, Nano-Silizium oder Polyarylamin in Frage, jedoch auch anorganische Materialien, welche in Lösung oder durch Sputtern oder Aufdampfen aufbringbar sind, beispielsweise Zno, a-Si. Die erste und die zweite Kondensatorplatte bilden einen integralen Bestandteil dieser Schaltung und sind in einer Elektrodenschicht der Elektronikbaugruppe ausgeformt, in welcher weitere ein oder mehrere Elektroden für ein oder mehrere organische Feldeffekttransistoren oder organische Dioden ausgeformt sind. Die erste und die zweite Kondensatorplatte bilden so einen integralen Bestandteil der von den elektrischen Funktionsschichten des mehrschichtigen Folienkörpers gebildeten integrierten elektronischen Schaltung. Ein Teilbereich eines zusammenhängenden elektrisch leitfähigen Bereichs einer Elektrodenschicht der Elektronikbaugruppe bildet so eine Elektrode eines organischen Feldeffekttransistors oder einer organischen Diode aus und ein anderer Teilbereich dieses leitfähigen Bereichs bildet eine Kondensatorplatte zur kapazitiven Ankopplung dieser Elektrode aus. Ein solcher Bereich der elektrisch leitfähigen Schicht bildet so einerseits eine Elektrode eines aktiven organisch elektrischen Bauelements und steht so beispielsweise in Kontakt mit einer halbleitenden Schicht der Elektronikbaugruppe und bildet andererseits eine Kondensatorplatte zur Ankopplung der Antennenbaugruppe aus.

Vorzugsweise weist die Antennenbaugruppe ebenfalls eine Trägerfolie aus einem Kunststoffmaterial auf. Es ist jedoch auch möglich, dass die Trägerfolie der Elektronikbaugruppe ebenfalls die Funktion eines Trägersubstrats für die Antennenbaugruppe erbringt und so auf der einen Oberfläche der Trägerfolie die elektrischen Funktionsschichten der Elektronikbaugruppe und auf der anderen Oberfläche der Trägerfolie die elektrischen Funktionsschichten der Antennenbaugruppe aufgebracht sind. Falls sowohl die Antennenbaugruppe als auch die Elektronikbaugruppe über eine Trägerfolie verfügen, sind diese Trägerfolien zueinander vorzugsweise so orientiert, dass die Trägerfolien der Antennenbaugruppe auf der der Elektronikbaugruppe gegenüberliegenden Seite der Antennenbaugruppe angeordnet ist und die Trägerfolie der Elektronikbaugruppe auf der der Antennenbaugruppe gegenüberliegenden Seite der Elektronikbaugrupe angeordnet ist. Die Trägerfolien der Antennenbaugruppe und der Elektronikbaugruppe können so weiter zur Verkapselung des RFID-Transponders verwendet werden, um so die elektrischen Funktionsschichten der Elektronikbaugruppe und der Antennenbaugruppe vor Umwelteinflüssen zu schützen. Weiter ist es jedoch auch möglich, dass die Trägerfolien der Antennenbaugruppe und der Elektronikbaugruppe in anderer Weise zueinander orientiert sind, d.h. dass die Trägerfolien beispielsweise die einander zugewandten Flächen der Elektronikbaugruppe und der Antennenbaugruppe bilden oder dass die Trägerfolie der Elektronikbaugruppe auf der der Antennenbaugruppe gegenüberliegenden Seite der Elektronikbaugruppe und die Trägerfolie der Antennenbaugruppe auf der der Elektronikbaugruppe zugewandten Seite der Antennenbaugruppe angeordnet ist oder umgekehrt.

Gemäß eines weiteren bevorzugten Ausführungsbeispiels der Erfindung ist in einem dritten und einem vierten Bereich des RFID-Transponders jeweils einer der einen oder mehreren elektrisch leitenden Funktionsschichten der Antennenbaugruppe in Form einer fünften bzw. einer sechsten Kondensatorplatte ausgeformt. Weiter weist der RFID-Transponder eine elektrisch leitfähige Funktionsschicht auf, die in dem dritten und fünften Bereich des RFID-Transponders in Form einer siebten bzw. achten Kondensatorplatte ausgeformt ist und so ausgeformt ist, dass die siebte und achte Kondensatorplatte galvanisch miteinander verbunden sind. Die fünfte und die siebte Kondensatorplatte und die sechste und die achte Kondensatorplatte bilden so zwei in Serie geschaltete Kondensatoren, die mit der Antennenspule zu einem Schwingkreis verschaltet sind. Auf diese Weise kann für die Bereitstellung des Schwingkreiskondensators auf Durchkontaktierung mit Wires verzichtet werden, es ergibt sich eine kostengünstig zu fertigende und auch mechanisch äußerst beständige Ausführungsform. Die leitende Funktionsschicht mit der siebten und achten Kondensatorplatte besteht hierbei bevorzugt aus einer streifenförmig ausgeformten Metallfolie, welche auf der Antennenbaugruppe aufkaschiert wird.

Bei entsprechender Wahl der Breite und Länge der fünften bis achten Kondensatorplatte, d.h. der Wahl der Breite der fünften und sechsten Kondensatorplatte bezüglich der Breite des Metallfolienstreifens, ist eine besonders vorteilhafte, nachträgliche Abstimmung des Schwingkreises auf die Resonanzfrequenz möglich: Entspricht die Breite der fünften und/oder sechsten Kondensatorplatte der Breite des Metallfolienstreifens, so ist durch Versatz des Streifens zu den Kondensatorplatten (Breitenversatz) die Resonanzfrequenz des Schwingkreises genau einstellbar. Eine nachträgliche Abstimmung z.B. auf 13,56 MHz auf 0.2 MHz genau ist so möglich. Eine besonders feinfühlige Einstellung der Resonanzfrequenz ist möglich, wenn die Kondensatorplatten einer der beiden in Serie geschalteten Kondensatoren sich in ihrer Breite in etwa entsprechen und bei dem anderen Kondensator sich jedoch - vorzugsweise um mehr als 50 % - unterscheiden. Es entspricht so beispielsweise die Breite der fünften Kondensatorplatte in etwa der Breite des Folienstreifens (Abweichung geringer als 10 %) und die sechste Kondensatorplatte ist um mehr als 50 % breiter oder schmäler als der Folienstreifen.

Im folgenden wird die Erfindung anhand von mehreren Ausführungsbeispielen unter Zuhilfenahme der beiliegenden Zeichnungen beispielhaft erläutert.
- Fig. 1: zeigt eine schematische Draufsicht auf einen erfindungsgemäßen RFID-Transponder.
- Fig. 2: zeigt eine Schnittdarstellung des RFID-Transponders nach Fig. 1.
- Fig. 3: zeigt ein Schaltdiagramm zur Verdeutlichung der Funktionsweise des RFID-Transponders nach Fig. 1.

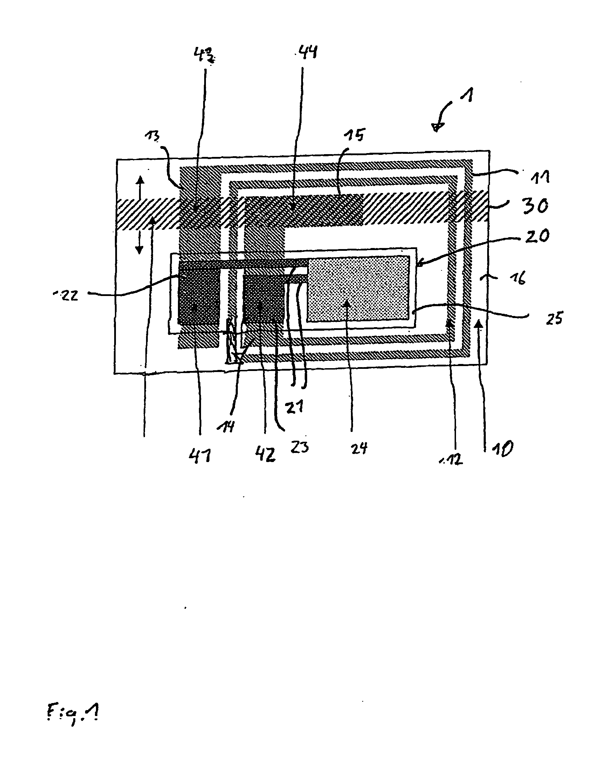

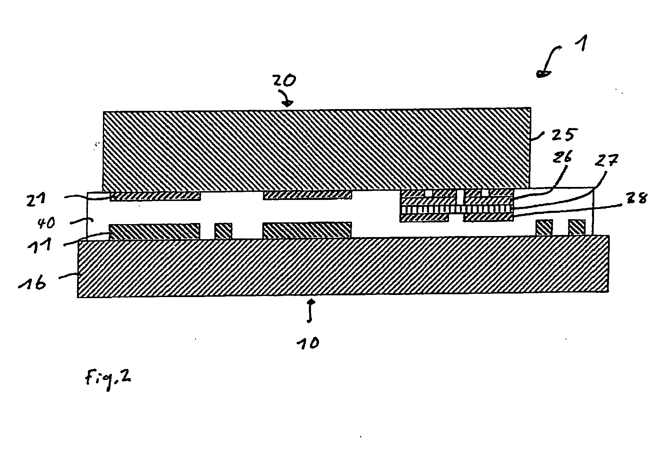

Die Figuren Fig. 1 und Fig. 2 zeigen einen RFID-Transponder 1, welcher aus einer Antennenbaugruppe 10 und einer Elektronikbaugruppe 20 aufgebaut ist.

Die Elektronikbaugruppe 20 ist in Form eines mehrschichtigen Folienkörpers ausgeführt und weist eine Trägerschicht 25, eine elektrisch leitfähige Funktionsschicht 21, eine elektrisch halbleitende Funktionsschicht 26, eine elektrisch nicht leitfähige Funktionsschicht 27 und eine elektrisch leitfähige Funktionsschicht 28 auf. Bei der Trägerschicht 25 handelt es sich vorzugsweise um eine Kunststofffolie, insbesondere aus u.a. Polyester, Polyethylen, Polycarbonat, Polypropylen, Polyetheretherketonketon, Polyetheretherketon, Polyamid, Polyphthalamid, syndiotaktisches Polystyrol, Polyvinylidendiflourid, Polytetraflurethylen mit einer Schichtdicke von 10 bis 50 µm.

Bei den elektrisch leitfähigen Schichten 21 und 28 handelt es sich vorzugsweise um dünne Metallschichten, im Dickebereich etwa zwischen 5 und 100 nm, beispielsweise aus Kupfer, Aluminium, Silber, Gold oder einer Metalllegierung. Weiterhin ist es auch möglich, dass die elektrisch leitfähigen Funktionsschichten 21 und 28 aus einem transparenten leitfähigen Material wie ITO oder TIOₓ oder aus einem organischen leitfähigen Material wie PEDOT-PSS bestehen.

Die elektrisch halbleitende Funktionsschicht 26 besteht vorzugsweise aus einem organischen Halbleiter, beispielsweise Polythiopen, Polyterthropen, Polyfluoren, Pentaceen, Tetraceen, Oligothropen, angoranischem Silizium eingebettet in einer Polymermatrix, Nano-Silizium oder Polyarylamin. Die Schichtdicke der organischen Halbleiterschicht beträgt vorzugsweise zwischen 5 nm bis 1 µm. Die Halbleiterschicht wird aus einer Lösung, beispielsweise einer wässrigen Lösung, mittels eines Druckverfahrens, beispielsweise eines Tiefdruckverfahrens oder Tampon-Druckverfahrens, oder auch mittels Spin-Coating, Sprühen oder Gießen aufgebracht.

Weiter kann die elektrisch halbleitende Funktionsschicht 26 auch aus einer Schicht bestehend aus im wesentlichen anorganischen

Substanzen ausgebildet sein, welche aus einer Lösung aufgebracht sind. So kann die Schicht aus einer aus einer Lösung aufgebrachten Schicht eines anorganischen Halbleiters bestehen, beispielsweise aus Nano-Partikeln eines anorganischen Halbleiters, beispielsweise Silizium, bestehen, die aus einer Lösung mittels eines der oben angeführten Verfahren aufgebracht sind, mit einer Schichtdicke zwischen 5nm und 1 µm. (Oder durch Sputtern oder Aufdampfen)

Bei der elektrisch nicht leitenden Funktionsschicht 27 handelt es sich vorzugsweise um eine Schicht aus einem Polymermaterial, beispielsweise aus Polymethylmethacrylat (PMMA), PVP, PHS, PS, Polystyrolcopolymeren, Harnstoffharzen oder PMMA-Copolymeren mit einer Schichtdicke von 5nm bis 1 µm. Auch diese Schicht ist vorzugsweise aus einer Lösung mittels einer der oben bezeichneten Verfahren, insbesondere mittels Tiefdruck aufgebracht.

Die elektrisch leitfähigen Funktionsschichten 21 und 28 sowie vorzugsweise auch die elektrisch halbleitende Funktionsschicht 27 und die elektrisch nicht leitende Funktionsschicht 27 liegen in strukturierter Form vor, wobei der von diesen Schichten gebildete Mehrschichtkörper in einem Bereich 24 eine organische elektrische Schaltung ausbildet. Diese organische elektrische Schaltung weist vorzugsweise einen aus einem oder mehreren organischen Dioden oder Feldeffekttransistoren aufgebauten Gleichrichter, einen aus einem oder mehreren organischen Feldeffektransistoren aufgebauten Modulator zur Lastmodulation des Trägersignals sowie eine organische Logikschaltung auf, welche ebenfalls mehrere organische Feldeffekttransistoren enthält. Es ist jedoch auch möglich, dass die in dem Bereich 24 ausgebildete organische elektronische Schaltung - je Anforderung an den RFID-Transponder - über andere Funktionsgruppen verfügt oder nur eine der oben beschriebenen Funktionsgruppen implementiert. Insoweit ist der Begriff RFID-Transponder als ein Funktionselement zu verstehen, welches ein RF-Signal beispielsweise durch Aufmodulation eines Antwortsignals beeinflusst oder auf ein solches Signal eine bestimmte Funktion ausführt.

Vorzugsweise bildet die elektrisch leitefähige Funktionsschicht 21 direkt eine Elektrodenschicht der organischen elektronischen Schaltung und ist so im Bereich 24 als Elektrode für einen oder mehrere organische Feldeffekttransistoren oder organische Dioden ausgeformt. Durch die Strukturierung der elektrisch leitfähigen Schichten 21 und 28 sowie vorzugsweise auch der elektrisch halbleitenden Funktionsschicht 26 und der elektrisch nicht leitenden Funktionsschicht 27 wird die oben beschriebene organische elektrische Schaltung in den Bereich 24 implementiert. Je nach Funktionsumfang der Schaltung können in dem Bereich 24 noch weitere, wie die Schicht 26, 27 und 28 ausgebildete elektrische Funktionsschichten vorgesehen sein. Weiter ist es auch möglich, dass weitere Schichten, die insbesondere keine elektrische Funktion erbringen, beispielsweise Haftvermittlungsschichten, in dem die Elektronikbaugruppe 20 ausbildenden Mehrschichtkörper vorgesehen sind.

Wie weiter in den Figuren Fig. 1 und Fig. 2 angedeutet ist die elektrisch leitende Funktionsschicht 21 in den Bereichen 41 und 42 jeweils in Form einer Kondensatorplatte 22 bzw. 23 ausgeformt. Diese Kondensatorplatten sind mit Verbindungsbahnen mit Bauelementen der organischen elektrischen Schaltung, beispielsweise mit Bereichen der elektrisch leitfähigen Funktionsschicht 22 verbunden, die Elektroden von organischen Dioden darstellen.

Die Kondensatorplatte 22 hat hierbei vorzugsweise eine Breite von 5mm bis 10 mm und eine Länge von 5 mm bis 25 mm und die Kondensatorplatte 23 hat vorzugsweise eine Breite von 5 mm bis 10 mm und eine Länge von 5mm bis 25 mm.

Die Antennenbaugruppe 10 besteht aus einem mehrschichtigen Folienkörper, welcher eine Trägerschicht 16 und eine elektrisch leitfähige Funktionsschicht 11 umfasst.

Bei der Trägerschicht 16 handelt es sich vorzugsweise um eine Kunststofffolie, insbesondere aus u.a. Polyester, Polyethylen, Polycarbonat, Polypropylen, Polyetheretherketonketon, Polyetheretherketon, Polyamid, Polyphthalamid, syndiotaktisches Polystyrol, Polyvinylidendiflourid, Polytetraflurethylen mit einer Schichtdicke von 12 bis 50 µm.

Hierbei ist es auch möglich, dass die Trägerschicht 16 noch eine oder mehrere weitere Schichten umfasst oder dass es sich hierbei auch um ein Papiersubstrat handelt, wie ein Warenetikett oder eine Verpackung oder dergleichen.

Die elektrisch leitefähige Funktionsschicht 11 besteht vorzugsweise aus einer metallischen Schicht, vorzugsweise mit einer Schichtdicke von 1 µm bis 100 µm. Die elektrisch leitende Funktionsschicht 11 ist, wie dies in Fig.1 angedeutet ist, bereichsweise in Form einer Antennenspule 12 ausgeformt. Die Antennenspule 12 kann hierbei zwischen 0 bis 10 Windungen umfassen (kommt auf die gewünschte Ressonanzfrequenz an → UHF haben keine Windungen mehr & sollten nicht ausgeschlossen werden), wobei die Breite der die Spule bildenden Leiterbahnen vorzugsweise zwischen 100 µm und 5 mm beträgt. Wie in Fig. 1 dargestellt ist im Bereich des einen Endes der Antennenspule 12 die elektrisch leitende Funktionsschicht 11 in Form einer Kondensatorplatte 13 und im Bereich des anderen Endes der Antennenspule 12 eine Kondensatorplatte 14 und daran anschließend eine Kondensatorplatte 15 ausgeformt, so dass die Enden der Antennenspule 12 mit den Kondensatorplatten 13 bzw. 14 und 15 elektrisch leitend verbunden sind. Die Kondensatorplatte 13 hat vorzugsweise eine Breite von 5 mm bis 25 mm und eine Länge von 5 mm bis 50 mm. Die Kondensatorplatte 15 ist, wie dies in Fig. 1 gezeigt ist, rechtwinkelig zu der Kondensatorplatte 14 angeordnet, wobei die Kondensatorplatte 14 vorzugsweise eine Breite von 5 mm bis 25 mm und eine Länge von 5 mm bis 80 mm und die Kondensatorplatte 15 eine Breite von 5 mm bis 25 mm und eine Länge von 5 mm bis 50 mm aufweist.

Weiter weist der RFID-Transponder einen elektrisch leitfähigen Folienstreifen 30 auf. Dieser Folienstreifen besteht vorzugsweise aus einer dünnen Metallfolie einer Dicke von 50 nm bis 50 µm. Es ist jedoch auch möglich, dass der Folienstreifen 30 aus einem Mehrschichtkörper bestehend aus einem Trägersubstrat, wie beispielsweise einem dünnen Kunststoffsubstrat, und einer dünnen Metallschicht besteht. Weiter ist es auch möglich, dass der Folienstreifen 30 auch von der Übertragungslage einer Transferfolie, beispielsweise einer Heißprägefolie gebildet ist, die eine dünne elektrisch leitfähige Schicht und noch weitere Schichten, beispielsweise eine Kleberschicht zur Festlegung des Streifen auf der Antennenbaugruppe 10 und/oder eine Schutzschicht umfasst. Weiter ist es auch möglich, dass anstelle eines Folienstreifens die elektrisch leitfähige Funktionsschicht mittels eines Druckverfahrens aufgetragen wird. So ist es beispielsweise möglich, dass ein elektrisch leitfähiger Druckstoff beispielsweise mittels Siebdruck auf die Antennenbaugruppe aufgedruckt wird. Es ist hierbei möglich, dass die elektrisch leitfähige Funktionsschicht bzw. der Folienstreifen 30 auf die der Elektronikbaugruppe zugewandten Seite der Antennenbaugruppe aufgebracht wird. Es ist aber auch möglich, dass die elektrisch leitfähige Funktionsschicht bzw. der Folienstreifen 30 auf die der Elektronikbaugruppe 20 gegenüberliegende Seite der Antennenbaugruppe 10 aufgebracht wird.

Der die Elektronikbaugruppe 20 ausbildende mehrschichtige Folienkörper wird in einem Rolle-zu-Rolle-Verfahren im Wesentlichen mit den oben beschriebenen Verfahren, wie Drucken, Rakeln, Aufdampfen und Sputtern hergestellt und vereinzelt. Weiter wird in einem parallelen Fertigungsprozess die Antennenbaugruppe 10 ebenfalls in einem Rolle-zu-Rolle-Verfahren gefertigt. Anschließend wird der Folienstreifen 30 auf die Antennenbaugruppe 10 appliziert und sodann die Elektronikbaugruppe 20 auf die Antennenbaugruppe 10 appliziert und mittels einer Kleberschicht 40 mit dieser mechanisch verbunden. Bei der Kleberschicht 40 handelt es sich um einen dielektrischen, elektrisch nicht leitfähigen Kleber, vorzugsweise um einen Kaltkleber oder um einen durch UV aktivierbaren Kleber. Vorzugsweise überragt hierbei die Trägerschicht 25 der Elektronikbaugruppe 20 ebenfalls den Folienstreifen 30, vorzugsweise ebenfalls den Bereich, in dem die elektrisch leitfähige Funktionsschicht der Antennenbaugruppe 10 vorgesehen ist, so dass der Folienstreifen 30 zwischen die Antennenbaugruppe 10 und die Elektronikbaugruppe 20 einkaschiert ist und die Trägerschichten 25 und 16 gleichzeitig die Funktion von Schutzschichten des RFID-Transponders 1 erbringen.

Die Antennenbaugruppe 10 und die Elektronikbaugruppe 20 werden hierbei derart aufeinander appliziert, dass - wie in Fig. 1 gezeigt - in den Bereichen 41 und 42 die Kondensatorplatten 22 und 23 der Elektronikbaugruppe mit den zugeordneten Kondensatorplatten 13 bzw. 14 der Antennenbaugruppe 10 in Überdeckung angeordnet sind. Die Kondensatorplatten 13 und 22 bilden hierbei einen Kondensator 54 und die Kondensatorplatten 14 und 23 einen Kondensator 55 aus. Weiter ist der Folienstreifen 30 derart auf der Antennenbaugruppe positioniert appliziert, dass der Folienstreifen 30 zum einen die Kondensatorplatte 13 und zum anderen die Kondensatorplatte 15 der Antennenbaugruppe 10 zumindest teilweise überdeckt. Der in Überdeckung mit den Kondensatorplatten 13 und 15 angeordnete Bereicht des Folienstreifens 13 bildet so eine jeweilige Kondensatorplatte aus, die mit den zugeordneten Kondensatorplatten 13 und 15 der Antennenbaugruppe 10 zwei in Serie verschaltete Kondensatoren 52 und 53 ausbilden. Durch Verschiebungen der Lage des Folienstreifens ist, wie in Fig. 1 angedeutet, auf einfachem Wege eine nachträgliche Abstimmung der Resonanzfrequenz des RFID-Transponders möglich. Durch Veränderung der Lage des Folienstreifens 30 verändert sich die Überdeckungsfläche, in der der Folienstreifen mit der Kondensatorplatte 15 in Überdeckung steht, nicht jedoch die Überdeckungsfläche bezüglich der Kondensatorplatte 13. Hierdurch verändert sich die Kapazität des Kondensators 52, nicht jedoch des Kondensators 53. Auf diese Weise ist ein genaues Abstimmen der Resonanzfrequenz des Schwingkreises des RFID-Transponders 1 möglich.

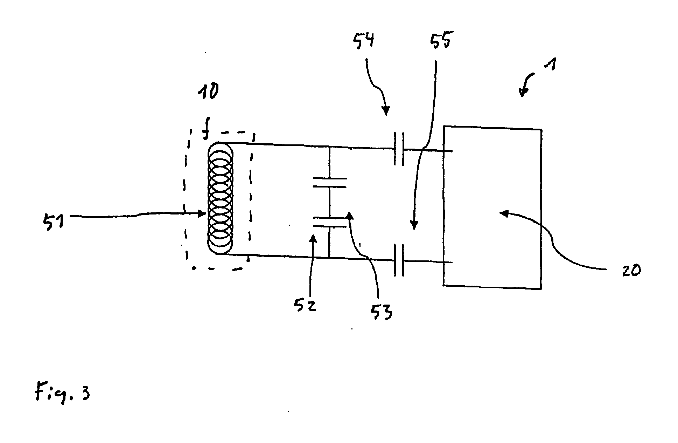

Fig. 3 zeigt ein Schaltbild, welches die elektrische Verkopplung der Antennenbaugruppe 10 und der Elektronikbaugruppe 20 des RFID-Transponders 1 verdeutlicht. Die Antennenbaugruppe 10 mit der Antennenspule 51 ist ausschließlich kapazitiv über die Kondensatoren 54 und 55 mit der Elektronikbaugruppe 20 verkoppelt. Die mittels der Kondensatorplatten 13 und 14 und dem Folienstreifen 30 realisierten Kondensatoren 52 und 53 bilden die Abstimmkapazität, mittels der die Resonanzfrequenz des Schwingkreises eingestellt werden kann. Die Antennenspule ist so einerseits induktiv mit der Antenne des Lesegerätes und andererseits kapazitiv mit der Elektronikbaugruppe gekoppelt.

## Patentansprüche

1. RFID-Transponder (1),
wobei der RFID-Transponder (1) eine Antennenbaugruppe (10) aufweist, welche eine oder mehrere elektrisch leitende Funktionsschichten (11) aufweist, von denen eine zumindest bereichsweise in Form einer Antennenspule (12) ausgeformt ist,
**dadurch gekennzeichnet,**
**dass** der RFID-Transponder (1) eine Elektronikbaugruppe (20) in Form eines mehrschichtigen Folienkörpers aufweist, welcher eine oder mehrere elektrisch leitende Funktionsschichten (21, 28) und eine oder mehrere elektrisch halbleitende Funktionsschichten (26) aufweist, welche eine integrierte elektronische Schaltung bilden, wobei in einem ersten Bereich (41) des RFID-Transponders (1) jeweils eine der einen oder mehreren elektrisch leitenden Funktionsschichten (21) der Elektronikbaugruppe, welche eine Elektrodenschicht der Elektronikbaugruppe ist, in welcher ein oder mehrere Elektroden für ein oder mehrere organische Feldeffekttransistoren oder organische Dioden ausgeformt sind, weiter in Form einer ersten Kondensatorplatte (22) ausgeformt ist, die so einen integralen Bestandteil der integrierten elektronischen Schaltung bildet, und in einem zweiten Bereich (42) des RFID-Transponders (1) eine der einen oder mehreren elektrisch leitenden Funktionsschichten (21) der Elektronikbaugruppe, welche eine Elektrodenschicht der Elektronikbaugruppe ist, in welcher ein oder mehrere Elektroden für ein oder mehrere organische Feldeffektransistoren oder organische Dioden ausgeformt sind, weiter in Form einer zweiten Kondensatorplatte (23) ausgeformt ist, die so einen integrierten Bestandteil der integrierten elektronischen Schaltung bildet, und in dem ersten Bereich (41) des RFID-Transponders (1) jeweils eine der einen oder mehreren elektrisch leitenden Furktionsschichten (11) der Antennenbaugruppe (10) in Form einer dritten Kondensatorplatte (13) ausgeformt ist, und In dem zweiten Bereich (42) des RFID-Transponders (1) jeweils eine der einen oder mehreren elektrisch leitenden Funktionsschichten (11) der Antennenbaugruppe (10) in Form einer vierten Korldensatorplatte (14) ausgeformt ist, wobei die Elektronikbaugruppe (20) und die Antennenbaugruppe (10) elektrisch über Kondensatoren (54, 55) gekoppelt sind, die von der ersten und dritten sowie von der zweiten und vierten Kondensatorplatte (22, 13; 23, 14) gebildet sind.

2. RFIb-Transponder (1) nach Anspruch 1,
**dadurch gekennzeichnet,**
**dass** die Antennenbaugruppe (10) und die Elektronikbaugruppe (20) galvanisch getrennt sind und ausschließlich über Kondensatorplatten kapazitiv elektrisch gekoppelt sind.

3. RFID-Transponder (1) nach einem der vorhergehenden Ansprüche,
**dadurch gekennzeichnet,**
**dass** die Elektronikbaugruppe (20) und die Antennenbaugruppe (10) durch eine Kleberschicht (40) miteinander verbunden sind.

4. RFID-Transponder (1) nach Anspruch 3,
**dadurch gekennzeichnet,**
**dass** die Kleberschicht dielektrisch ist.

5. RFID-Transponder (1) nach einem der Ansprüche 3 oder 4,
**dadurch gekennzeichnet,**
**dass** die Kleberschicht eine Dicke von 5 - 15 µm besitzt.

6. RFID-Transponder (1) nach einem der Ansprüche 3 bis 5,
**dadurch gekennzeichnet,**
**dass** die Kleberschicht im ersten und zweiten Bereich (41, 42) von einer Vielzahl von Kleberpunkten gebildet ist.

7. RFID-Transponder (1) nach einem der vorhergehenden Ansprüche,
**dadurch gekennzeichnet,**
**dass** die erste und die dritte Kondensatorplatte (22, 13) und die zweite und die vierte Kondensatorplatte (23, 14) weniger als 15 µm voneinander entfernt sind.

8. RFID-Transponder (1) nach einem der vorhergehenden Ansprüche,
**dadurch gekennzeichnet,**
**dass** die erste Kondensatorplatte (22) und die dritte Kondensatorplatte (13) jeweils eine Überdeckungsfläche von mehr als 10 mm² und die zweite Kondensatorplatte (23) und die dritte Kondensatorplatte (14) eine Überdeckungsfläche von mehr als 10 mm² aufweisen.

9. RFID-Transponder (1) nach einem der vorhergehenden Ansprüche,
**dadurch gekennzeichnet,**
**dass** die Antennenbaugruppe (10) eine Trägerfolie (16) aus einem Kunststoffmaterial einer Dicke von 5 µm bis 100 µm aufweist, welche auf der der Elektronikbaugruppe (20) gegenüberliegenden Seite der Antennenbaugruppe (10) angeordnet ist.

10. RFID-Transponder (1) nach einem der vorhergehenden Ansprüche,
**dadurch gekennzeichnet,**
**dass** die Elektronikbaugruppe (20) eine Trägerfolie (16) aus einem Kunststoffmaterial einer Dicke von 5 µm bis 100 µm aufweist, welche auf der der Antennenbaugruppe (10) gegenüberliegenden Seite der Elektronikbaugruppe (20) angeordnet Ist.

11. RFID-Transponder nach einem der vorhergehenden Ansprüche,
**dadurch gekennzeichnet,**
**dass** die Elektronikbaugruppe eine Trägerfolie aus einem Kunststoffmaterial einer Dicke von 5 µm bis 100 µm aufweist, welche auf der der Antennenbaugruppe zugewandten Seite der Elektronikbaugruppe angeordnet ist und dass die in Form der Antennenspule ausgeformte elektrisch leitende Funktionsschicht der Antennenbaugruppe auf der der Elektronikbaugrupppe gegenüberliegenen Oberfläche der Trägerfolie angeordnet ist.

12. RFID-Transponder (1) nach einem der vorhergehenden Ansprüche,
**dadurch gekennzeichnet,**
**dass** in einem dritten Bereich (43) und einem vierten Bereich (44) des RFID-Transponders (1) jeweils eine der einen oder mehreren elektrisch leitenden Funktionsschichten (11) der Antennenbaugruppe (10) in Form einer fünften (13) bzw. sechsten (15) Kondensatorplatte ausgeformt sind, und der RFID-Transponder (1) eine elektrisch leitfähige Funktionsschicht (30) aufweist, die in dem dritten und dem vierten Bereich (43, 44) des RFID-Transponders (1) in Form einer siebten bzw, achten Kondensatorplatte ausgeformt ist und so ausgeformt ist, dass die siebte und achte Kondensatorplatte galvanisch miteinander verbunden sind, wobei die fünfte und die siebte Kondensatorplatte und die sechste und die achte Kondensatorplatte Kondensatoren (52, 53) bilden, die mit der Antennenspule (12) zu einem Schwingkreis verschaltet sind.

13. RFID-Transponder (1) nach Anspruch 12,
**dadurch gekennzeichnet,**
**dass** die leitfähige Funktionsschicht (30) mit der siebten und achten Kondensatorplatte von einer mit der Antennenbaugruppe (10) über eine Kleberschicht (40) verbundene Metallfolie gebildet ist.

14. RFID-Transponder (1) nach Anspruch 13,
**dadurch gekennzeichnet,**
**dass** die Metallfolie streifenförmig ausgeformt ist und zwischen Antennebaugruppe (10) und Elektronikbaugruppe (20) angeordnet ist.

## Claims

1. RFID transponder (1),
wherein the RFID transponder (1) has an antenna assembly (10), which has one or more electrically conductive functional layers (11), one of which is formed in at least some areas in the form of an antenna coil (12),
**characterised in that**,
the RFID transponder (1) has an electronic assembly (20) in the form of a multilayer sheet member having one or more electrically conductive functional layers (21, 28) and one or more electrically semi-conductive functional layers (26), which form an integrated electronic circuit, wherein in a first region (41) of the RFID transponder (1), each one of the one or more electrically conductive functional layers (21) of the electronic assembly, which is an electrode layer of the electronic assembly, in which one or more electrodes are formed for one or more organic field-effect transistors or organic diodes, is further formed in the form of a first capacitor plate (22), which forms an integral component of the integrated electronic circuit, and in a second region (42) of the RFID transponder (1), one of the one or more electrically conductive functional layers (21) of the electronic assembly, which is an electrode layer of the electronic assembly, in which one or more electrodes are formed for one or more organic field-effect transistors or organic diodes, is further formed in the form of a second capacitor plate (23), which forms an integral component of the integrated electronic circuit, and in the first region (41) of the RFID transponder (1), each one of the one or more electrically conductive functional layers (11) of the antenna assembly (10) is formed in the form of a third capacitor plate (13), and in the second region (42) of the RFID transponder (1), each one of the one or more electrically conductive functional layers (11) of the antenna assembly (10) is formed in the form of a fourth capacitor plate (14), wherein the electronic assembly (20) and the antenna assembly (10) are electronically coupled by capacitors (54, 55) which are formed from the first and third, and the second and fourth capacitor plates (22, 13; 23, 14).

2. RFID transponder (1) according to claim 1,
**characterised in that**,
the antenna assembly (10) and the electronic assembly (20) are galvanically isolated and electrically coupled capacitively exclusively by capacitor plates.

3. RFID transponder (1) according to one of the preceding claims,
**characterised in that**,
the electronic assembly (20) and the antenna assembly (10) are connected to each other by an adhesive layer (40).

4. RFID transponder (1) according to claim 3,
**characterised in that**,
the adhesive layer is dielectric.

5. RFID transponder (1) according to one of claims 3 or 4,
**characterised in that**,
the adhesive layer has a thickness of 5-15µm.

6. RFID transponder (1) according to one of claims 3 to 5,
**characterised in that**,
the adhesive layer is formed by a plurality of adhesive dots in the first and second region (41, 42).

7. RFID transponder (1) according to one of the preceding claims,
**characterised in that**,
the first and the third capacitor plates (22, 13) and the second and the fourth capacitor plates (23, 14) are less than 15µm apart from one another.

8. RFID transponder (1) according to one of the preceding claims,
**characterised in that**,
the first capacitor plate (22) and the third capacitor plate (13) each have a covering surface of more than 10mm² and the second capacitor plate (23) and the fourth capacitor plate (14) have a covering surface of more than 10mm².

9. RFID transponder (1) according to one of the preceding claims,
**characterised in that**,
the antenna assembly (10) has a backing sheet (16) made from a synthetic material with a thickness of 5µm to 100µm, which is arranged on the side of the antenna assembly (10) which is opposite the electronic assembly (20).

10. RFID transponder (1) according to one of the preceding claims,
**characterised in that**,
the electronic assembly (20) has a backing sheet (16) made from a synthetic material with a thickness of 5µm to 100µm, which is arranged on the side of the electronic assembly (20) which is opposite the antenna assembly (10).

11. RFID transponder (1) according to one of the preceding claims,
**characterised in that**,
the electronic assembly has a backing sheet made from a synthetic material with a thickness of 5µm to 100µm, which is arranged on the side of the electronic assembly facing the antenna assembly, and **in that** the electrically conductive functional layer of the antenna assembly, which is formed in the form of the antenna coil, is arranged on the surface of the backing sheet opposite the electronic assembly.

12. RFID transponder (1) according to one of the preceding claims,
**characterised in that**,
in a third region (43) and a fourth region (44) of the RFID transponder (1), each one of the one or more electrically conductive functional layers (11) of the antenna assembly (10) are formed in the form of a fifth (13) or sixth (15) capacitor plate, and **in that** the RFID transponder (1) has an electrically conductive functional layer (30), which is formed in the third and the fourth region (43, 44) of the RFID transponder (1) in the form of a seventh or eighth capacitor plate, and is formed in such a way that the seventh and eighth capacitor plates are connected to each other galvanically, wherein the fifth and seventh capacitor plates and the sixth and eighth capacitor plates form capacitors (52, 53), which are connected to an oscillating circuit by the antenna coil (12).

13. RFID transponder (1) according to claim 12,
**characterised in that**,
the conductive functional layer (30) with the seventh and eighth capacitor plates is formed by a metal sheet which is connected to the antenna assembly (10) by an adhesive layer (40).

14. RFID transponder (1) according to claim 13,
**characterised in that**,
the metal sheet is formed in strips and is arranged between the antenna assembly (10) and the electronic assembly (20).

## Revendications

1. Transpondeur RFID (1),
sachant que le transpondeur RFID (1) présente un module d'antenne (10), lequel présente une ou plusieurs couches fonctionnelles (11) électriquement conductrices, dont l' une est façonnée au moins par endroits sous la forme d'un bobine-antenne (12),
**caractérisé en ce**
**que** le transpondeur RFID (1) présente un module électronique (20) sous la forme d'un corps en feuille multicouche, lequel présente une ou plusieurs couches fonctionnelles (21, 28) électriquement conductrices et une ou plusieurs couches fonctionnelles (26) électriquement semi-conductrices, lesquelles forment un circuit électronique intégré, sachant que dans la première zone (41) du transpondeur RFID (1) respectivement une ou plusieurs des couches fonctionnelles (21) électriquement conductrices du module électronique, qui est une couche d'électrodes du module électronique, dans laquelle une ou plusieurs électrodes sont façonnées pour un ou plusieurs transistors organiques à effet de champ ou pour des diodes organiques, sont façonnées en outre sous la forme d'une première plaque de condensateur (22), qui forme ainsi un composant intégral du circuit électronique intégré, et sachant que dans une deuxième zone (42) du transpondeur RFID (1), une ou plusieurs des couches fonctionnelles (21) électriquement conductrices du module électronique, qui est une couche d'électrodes du module électronique, dans laquelle une ou plusieurs électrodes sont façonnées pour un ou plusieurs des transistors organiques à effet de champ ou pour des diodes organiques, sont façonnées en outre sous la forme d'une deuxième plaque de condensateur (23), qui forme ainsi un composant du circuit électronique intégré, et sachant que dans la première zone (41) du transpondeur RFID (1), respectivement une ou plusieurs des couches fonctionnelles (11) électriquement conductrices du module d'antenne (10) sont façonnées sous la forme d'une troisième plaque de condensateur (13), et que dans la deuxième zone (42) du transpondeur RFID (1), respectivement une ou plusieurs des couches fonctionnelles (11) électriquement conductrices du module d'antenne (10) sont façonnées sous la forme d'une quatrième plaque de condensateur (14), sachant que le module électronique (20) et le module d'antenne (10) sont couplés électriquement par l'intermédiaire de condensateurs (54, 55), qui sont formés par la première plaque de condensateur et la troisième plaque de condensateur ainsi que par la deuxième plaque de condensateur et la quatrième plaque de condensateur (22, 13 ; 23, 14).

2. Transpondeur RFID (1) selon la revendication 1,
**caractérisé en ce**
**que** le module d'antenne (10) et le module électronique (20) sont séparés galvaniquement et sont couplés exclusivement électriquement de manière capacitive exclusivement par l'intermédiaire de plaques de condensateur.

3. Transpondeur RFID (1) selon l'une quelconque des revendications précédentes,
**caractérisé en ce**
**que** le module électronique (20) et le module d'antenne (10) sont reliés l'un à l'autre par une couche de colle (40).

4. Transpondeur RFID (1) selon la revendication 3,
**caractérisé en ce**
**que** la couche de colle est diélectrique.

5. Transpondeur RFID (1) selon l'une quelconque des revendications 3 ou 4,
**caractérisé en ce**
**que** la couche de colle présente une épaisseur allant de 5 à 15 µm.

6. Transpondeur RFID (1) selon l'une quelconque des revendications 3 à 5,
**caractérisé en ce**
**que** la couche de colle est formée dans la première zone et dans la deuxième zone (41, 42) par une pluralité de points de colle.

7. Transpondeur RFID (1) selon l'une quelconque des revendications précédentes,
**caractérisé en ce**
**que** la première plaque de condensateur et la troisième plaque de condensateur (22, 13) et la deuxième plaque de condensateur et la quatrième plaque de condensateur (23, 14) sont éloignées les unes des autres de moins de 15 µm.

8. Transpondeur RFID (1) selon l'une quelconque des revendications précédentes,
**caractérisé en ce**
**que** la première plaque de condensateur (22) et la troisième plaque de condensateur (13) présentent respectivement une surface de recouvrement de plus de 10 mm², et en ce que la deuxième plaque de condensateur (23) et la troisième plaque de condensateur (14) présentent une surface de recouvrement de plus de 10 mm².

9. Transpondeur RFID (1) selon l'une quelconque des revendications précédentes,
**caractérisé en ce**
**que** le module d'antenne (10) présente un film de support (16) constitué d'une matière plastique d'une épaisseur comprise entre 5 µm et 100 µm, lequel est disposé sur le côté du module d'antenne (10) faisant face au module électronique (20).

10. Transpondeur RFID (1) selon l'une quelconque des revendications précédentes,
**caractérisé en ce**
**que** le module électronique (20) présente un film de support (16) constitué d'une matière plastique d'une épaisseur comprise entre 5 µm et 100 µm, lequel est disposé sur le côté du module électronique (20) faisant face au module d'antenne (10).

11. Transpondeur RFID selon l'une quelconque des revendications précédentes,
**caractérisé en ce**
**que** le module électronique présente un film de support constitué d'une matière plastique d'une épaisseur comprise entre 5 µm et 100 µm, lequel est disposé sur le côté du module électronique tourné vers le module d'antenne, et en ce que la couche fonctionnelle du module d'antenne, électriquement conductrice et façonnée sous la forme de la bobine-antenne, est disposée sur la surface du film de support faisant face au module électronique.

12. Transpondeur RFID (1) selon l'une quelconque des revendications précédentes,
**caractérisé en ce**
**que** dans la troisième zone (43) et dans la quatrième zone (44) du transpondeur RFID (1), respectivement une ou plusieurs des couches fonctionnelles (11) électriquement conductrices du module d'antenne (10) sont façonnées sous la forme d'une cinquième plaque de condensateur (13) ou d'une sixième plaque de condensateur (15), et en ce que le transpondeur RFID (1) présente une couche fonctionnelle (30) électriquement conductrice, laquelle est façonnée dans la troisième zone et la quatrième zone (43, 44) du transpondeur RFID (1) sous la forme d'une septième plaque de condensateur ou d'une huitième plaque de condensateur et est façonnée de telle manière que la septième plaque de condensateur et la huitième plaque de condensateur sont reliées l'une à l'autre de manière galvanique, sachant que la cinquième plaque de condensateur et la septième plaque de condensateur et la sixième plaque de condensateur et la huitième plaque de condensateur forment des condensateurs (52, 53) qui sont commutés avec la bobine-antenne (12) pour former un circuit oscillant.

13. Transpondeur RFID (1) selon la revendication 12,
**caractérisé en ce**
**que** la couche fonctionnelle (30) conductrice dotée de la sixième plaque de condensateur et de la huitième plaque de condensateur est formée par un film métallique relié au module d'antenne (10) par l'intermédiaire d'une couche de colle (40).

14. Transpondeur RFID (1) selon la revendication 13,
**caractérisé en ce**
**que** le film métallique est façonné de manière à présenter la forme d'une bande et est disposé entre le module d'antenne (10) et le module électronique (20).
